# EUROPEAN PATENT APPLICATION

(11) **EP 2 717 212 A1**
(43) Date of publication of application: **09.04.2014**
(21) Application number: 12803154.9
(22) Date of filing: 24.02.2012
(51) Int. Cl.: G06Q 30/02, G06F 17/30

(54) **INFORMATION PROCESSING DEVICE, INFORMATION PROCESSING METHOD, INFORMATION PROCESSING PROGRAM, AND STORAGE MEDIUM HAVING INFORMATION PROCESSING PROGRAM STORED THEREON**

(30) Priority: 22.06.2011 JP 2011138702
(71) Applicant: Rakuten, Inc., Tokyo 140-0002 (JP)
(72) Inventor: WATANABE Taichi, Tokyo 140-0002 (JP)
(74) Representative: EIP
(86) International application number: PCT/JP2012/054560
(87) International publication number: WO 2012/176497

(57) **Abstract**

Provided are an information processing apparatus, an information processing method, an information processing program, and a recording medium having stored therein the information processing program, which can further reflect a user' s preference with respect to a display order of information of a plurality of transaction targets as compared with the prior art. The information processing apparatus acquires review information of a user trying to select a transaction target, from a database that stores user' s review information regarding a plurality of transaction targets and user' s evaluation scores regarding each of a plurality of predetermined evaluation items in association with each piece of information of the plurality of transaction targets. Then, the information processing apparatus specifies an evaluation item on which a user puts emphasis among the plurality of evaluation items when selecting the transaction target, based on the acquired review information, and displays the information of the transaction targets in display order based on the evaluation score with respect to the evaluation item.

## Description

### Technical Field

The present invention relates to the technical field of information processing apparatuses and the like which can display a plurality of information, such as products or accommodations, in a predetermined display order, by a user of a terminal device.

### Background Art

In the past, there have been known shopping sites that allow a user of a terminal device to purchase desired products via Internet, or facility reservation sites that allow a user of a terminal device to reserve the use of desired accommodation. For example, there is known a technology that displays information of a plurality of products (or information of accommodations and the like) on web pages provided from such sites in display order of, for example, price. On the other hand, Patent Literature 1 discloses a technology that products introduced in latest updated web pages are sorted as hot products to have a high rank in a search result. Also, there is known a system that determines a display order of a plurality of product information, based on a user's product purchase record.

### Citation List

### Patent Literature

Patent Literature 1: JP 2010-134651 A

### Summary of the Invention

### Problem to be solved by the Invention

However, it cannot be always said that a user's product evaluation is reflected to the product purchase record. For example, it frequently occurs that although a user purchased a product, the product is different from that expected and thus is hardly used. On the other hand, there is also known a review method that gives an evaluation score to each of a plurality of predetermined evaluation items. However, since the magnitude of the evaluation score merely indicates a user's evaluation of the product, it is not sufficient as information that specifies a user's preference.

The present invention has been made in view of the above problems and the like, and an object of the present invention is to provide an information processing apparatus, an information processing method, an information processing program, and a recording medium having stored therein the information processing program, which can reflect a user's preference more than the prior art with respect to a display order of a plurality of transaction targets.

### Means for solving the Problem

In order to solve the above problem, the invention according to claim 1 is an information processing apparatus comprising:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.

According to the present invention, it is configured such that the evaluation item on which the user puts emphasis when selecting the transaction target is specified among the plurality of evaluation items, based on the review information of the user trying to select the transaction target, and the information of the transaction targets is displayed in the display order of the evaluation score with respect to the evaluation item. Therefore, the user's preference can be further reflected with respect to the display order of the information of the plurality of transaction targets as compared with the prior art.

The invention according to claim 2 is the information processing apparatus according to claim 1,
wherein the specifying means specifies the evaluation item, based on appearance frequency of terms included in the review information.

According to the present invention, it is possible to specify the evaluation item to which the user's preference is further reflected.

The invention according to claim 3 is the information processing apparatus according to claim 1 or 2, further comprising:
a narrowing means that narrows a range to a plurality of users among all users who provided the review information stored in the storing means, based on a result of comparison between information acquired from the review information of the user trying to select the transaction target and information acquired from review information of other user; and
a calculating means that calculates evaluation scores among a plurality of users, based on the evaluation score regarding the evaluation item specified by the specifying means, the evaluation score being for each of the plurality of users narrowed by the narrowing means,
wherein the control unit uses the evaluation scores, which are calculated by the calculating means, as the evaluation score of the transaction target associated with the evaluation score and the review information of each of the plurality of users, when determining the display order.

According to the present invention, since the evaluation score is calculated based on the evaluation score of each contributor of the review information similar to the content of the user' s review information, the user' s preference can be further reflected with respect to the display order of the information of the transaction target.

The invention according to claim 4 is the information processing apparatus according to any one of claims 1 to 3,
wherein among number attributes classified into a plurality of attributes according to the number of users, the number attribute to which the number of users using the transaction target in the past belongs is associated with the review information, and
the acquiring means acquires the review information associated with the number attribute, to which the number of users input as a search condition by a user trying to select the transaction target belongs.

According to the present invention, it is possible to specify the evaluation item to which the user's preference is further reflected, based on the past review information matched with the number of users. As a result, the user's preference can be further reflected with respect to the display order of the information of the plurality of transaction targets.

The invention according to claim 5 is the information processing apparatus according to any one of claims 1 to 4, further comprising a determining means that determines an acceptable value with respect to a second evaluation item other than the evaluation item specified by the specifying means,
wherein among a plurality of transaction targets associated with a same evaluation score with respect to the evaluation item specified by the specifying means, information of the transaction targets is displayed in such a display order that a display priority is given to the transaction target whose evaluation score with respect to the second evaluation item is an acceptable value or more, the acceptable value being determined by the determining means.

According to the present invention, in a case where there is a plurality of transaction targets having the same evaluation score with respect to the evaluation item on which the user puts emphasis, the display order of the information of the transaction target whose evaluation score with respect to the second evaluation item is unacceptable (intolerable) by the user can be lowered down. Therefore, the user's preference can be reflected with respect to the display order of the information of the plurality of transaction targets.

The invention according to claim 6 is the information processing apparatus according to any one of claims 1 to 5,
wherein the specifying means specifies an evaluation item, which corresponds to a term having a dependency relation with a positive term included in the review information, as the evaluation item on which the user puts emphasis when selecting the transaction target.

According to the present invention, by specifying the term having the modification relation with the positive term as the evaluation item, it is possible to specify the evaluation item to which the user's preference is much more reflected.

The invention according to claim 7 is the information processing apparatus according to claim 6,
wherein when there are a plurality of candidates of the evaluation item on which the user puts emphasis when selecting the transaction target, the specifying means specifies an evaluation item, which corresponds to a term having a dependency relation with a positive term included in the review information, as the evaluation item on which the user puts emphasis when selecting the transaction target.

According to the present invention, when there is a plurality of candidates of the evaluation item on which the user puts emphasis when selecting the transaction target, it is possible to specify the evaluation item to which the user's preference is much more reflected.

The invention according to claim 8 is the information processing apparatus according to any one of claims 1 to 5,
wherein when an evaluation score of the evaluation item corresponding to a term having a dependency relation with a negative term included in the review information is a threshold value or more, the specifying means specifies the evaluation item as the evaluation item on which the user puts emphasis when

selecting the transaction target.

According to the present invention, it is possible to specify the evaluation item to which the user' s persistence is reflected.

The invention according to claim 9 is the information processing apparatus according to claim 7,
wherein when there are a plurality of evaluation items having the threshold value or more, the specifying means specifies the evaluation item, whose evaluation score is large, as the evaluation item on which the user puts emphasis when selecting the transaction target.

According to the present invention, it is possible to specify the evaluation item to which the user' s persistence is stronger.

The invention according to claim 10 is an information processing method, which is executed by a computer, the information processing method comprising:
a step of acquiring review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a step of specifying an evaluation item on which a user puts emphasis among the plurality of evaluation items when selecting the transaction target, based on the acquired user's review information; and
a step of displaying all or part of the information of the transaction targets which are stored in the storing means, on a display screen in display order based on the evaluation score with respect to the specified evaluation item.

The invention according to claim 11 is an information processing program which causes a computer to function as:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.

The invention according to claim 12 is a recording medium having stored therein an information processing program which causes a computer to function as:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.

### Advantageous Effect of the Invention

According to the invention, it is configured such that the evaluation item on which the user puts emphasis when selecting the transaction target is specified among the plurality of evaluation items, based on the review information of the user trying to select the transaction target, and the information of the transaction targets is displayed in the display order of the evaluation score with respect to the evaluation item. Therefore, the user's preference can be further reflected with respect to the display order of the information of the plurality of transaction targets as compared with the prior art.

### Brief Description of the Drawings

Fig. 1 is a diagram illustrating an example of a schematic configuration of an information providing system S according to the present embodiment.
Fig. 2 is a block diagram illustrating an example of a schematic configuration of an information providing server SA according to the present embodiment.
Fig. 3A to Fig. 3C are diagrams illustrating examples of contents (items) registered in a variety of databases.
Fig. 4 is a flowchart illustrating an evaluation item specifying processing in a system controlling unit 4 of the information providing server SA.
Fig. 5 is a flowchart illustrating a web page providing processing in the system controlling unit 4 of the information providing server SA.
Fig. 6A and Fig. 6B are conceptual diagrams illustrating examples of a display order of facility information of each facility.
Fig. 7 is a diagram illustrating an example of a facility list page displayed on a window screen of a user terminal UT1.

### Mode for carrying out the Invention

Hereinafter, embodiments of the present invention will be described with reference to the drawings. Also, embodiments described below are embodiments in a case where the present invention is applied to an information providing system.

### [1. Schematic Configuration and Function of Information Providing System]

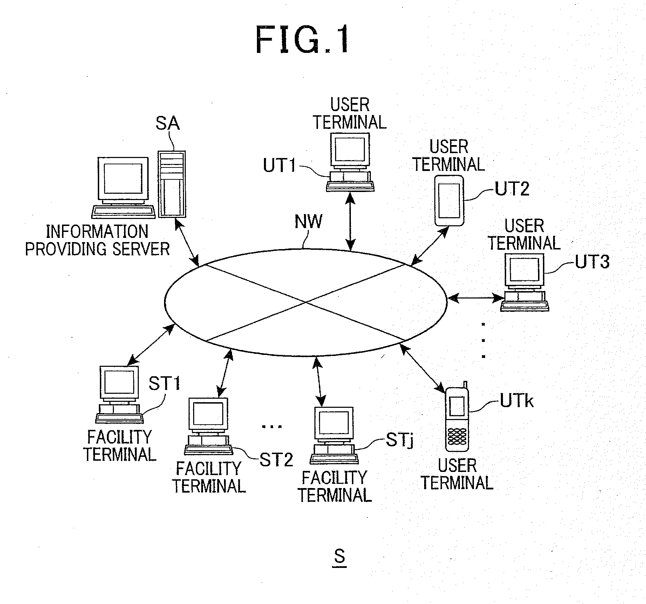

First, a schematic configuration and function of an information providing system S according to an embodiment of the present invention will be described with reference to Fig. 1.

Fig. 1 is a diagram illustrating an example of a schematic configuration of the information providing system S according to the present embodiment. As illustrated in Fig. 1, the information providing system S includes a plurality of user terminals (example of a terminal device) UTn (n = 1, 2, 3 ··· k), a plurality of facility terminals STm (m = 1, 2, 3 ··· j), and an information providing server (example of an information processor) SA. Each of the user terminals UTn, the facility terminals STm, and the information providing server SA are connected to a network NW. The network NW is constructed by, for example, Internet, a dedicated communication line (for example, community antenna television (CATV) line, a mobile communication network (including a base station and the like), and a gateway or the like.

Also, the user terminal UTn and the facility terminals STm are configured by, for example, a personal computer (PC), a personal digital assistant (PDA), a mobile phone, or a smartphone, and have a browser function. The user terminals UTn and the facility terminals STm obtain a web page by performing a page request (hypertext transfer protocol (HTTP) request) to the information providing server SA by a web browser, and display the web page on a display screen displayed on a display. Also, the window screen is an active display area of the web browser.

The information providing server SA is a server (for example, a web server, a database server, or the like) that is installed for operating, for example, a facility reservation site and the like. The facility reservation site is a site that allows the user of the user terminal UTn to reserve the use of a desired facility (example of a transaction target according to facility reservation). Examples of the facility may include accommodations, golf course facilities, public facilities, and commercial facilities.

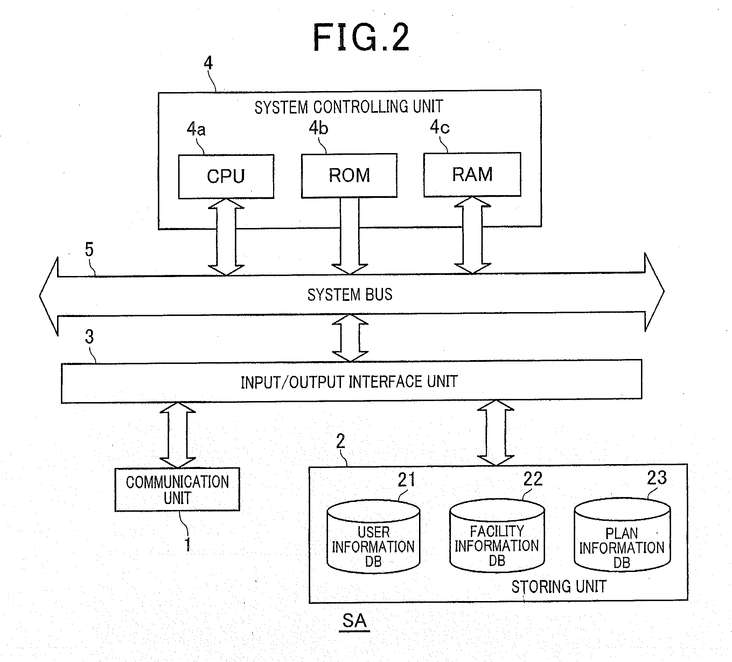

Fig. 2 is a block diagram illustrating an example of a schematic configuration of the information providing server SA according to the present embodiment. As illustrated in Fig. 2, the information providing server SA includes a communication unit 1, a storing unit 2 (example of a storing means), an input/output interface unit 3, and a system controlling unit 4. The system controlling unit 4 and the input/output interface unit 3 are connected through a system bus 5.

The communication unit 1 is configured to access the network NW and control a communication state of the user terminal UTn or the facility terminal STm.

The storing unit 2 is configured by, for example, a hard disk drive or the like, and stores various programs, such as an operating system and a server program (including an information processing program of the present invention). Also, the server program, for example, may be distributed from a predetermined server or the like through the network NW, or may be provided in a state of being recorded in a compact disc (CD), a digital versatile disc (DVD), or the like.

Also, the storing unit 2 stores a structured document (for example, hyper text markup language (HTML) document or XHTML document and the like) file (example of data for display) constituting a web page displayed on the user terminal UTn, an image file, and the like. As such a web page, there are a page (hereinafter, referred to as a "search condition input page") on which a user can input search condition used to search for a facility selected by the user, a page (hereinafter, referred to as a "facility list page") that displays a list of facility information regarding facilities (example of information of transaction target and, hereinafter, referred to as "facility information of facility"), a page (hereinafter, referred to as a "facility detail page") that displays detail information of the facility, a page (hereinafter, referred to as "plan list page") that displays a list of plan information regarding a plan provided by the facility (example of information of transaction targets and, hereinafter, referred to as "plan information of facility"), a page (hereinafter, referred to as a "review input page") on which a user (for example, a user having reserved the facility or his/her accompanying person) can input a review and evaluation of the facility as a contributor, and a page that displays a list of evaluation information and review information indicating the review.

Herein, the facility information of the facility includes information of, for example, a facility name, a facility image, a facility feature, a usage fee, an address, a telephone number, a traffic access, and the like. Also, in a case where the facility is the accommodation, the detail information of the facility includes information of check-in, check-out, in-building facility, number of rooms, and room facility (including equipment), as well as the facility information. Also, in a case where the facility is the accommodation, the plan information of the plan provided from the corresponding facility includes information of, for example, a plan name, a feature, a usage purpose, a usage schedule, a usage fee, number of users, a meal, and payment or the like. Also, the plan also is one of the transaction targets related to the facility reservation.

Also, the review (also called word of mouth) refers to, for example, impression, comment, and criticism, and the review information refers to, for example, a character string indicating the review (Japanese, English, Chinese, and the like are possible, and there is no special limitation to the language). Also, the evaluation information is an evaluation value (example of an evaluation score) representing the review with numbers of "1 to 5", and the evaluation is highly ranked as the number is higher. Also, the user may perform the evaluation of the facility with respect to each of a plurality of evaluation items (also called evaluation axes) of different viewpoints. Examples of the evaluation items of the accommodation may include a service (customer service), a location, a room, equipment (amenities), a bath, and a meal. Also, for example, an average value of the evaluation values of the respective evaluation items is a comprehensive evaluation (comprehensive evaluation value) of the facility. Also, the evaluation is a concept included in the review in a broad sense, but, in the present embodiment, unless otherwise expressly mentioned, the review and the evaluation are distinguished from each other.

Also, a user information database (DB) 21, a facility information database (DB) 22, a plan information database (DB) 23 are constructed in the storing unit 2.

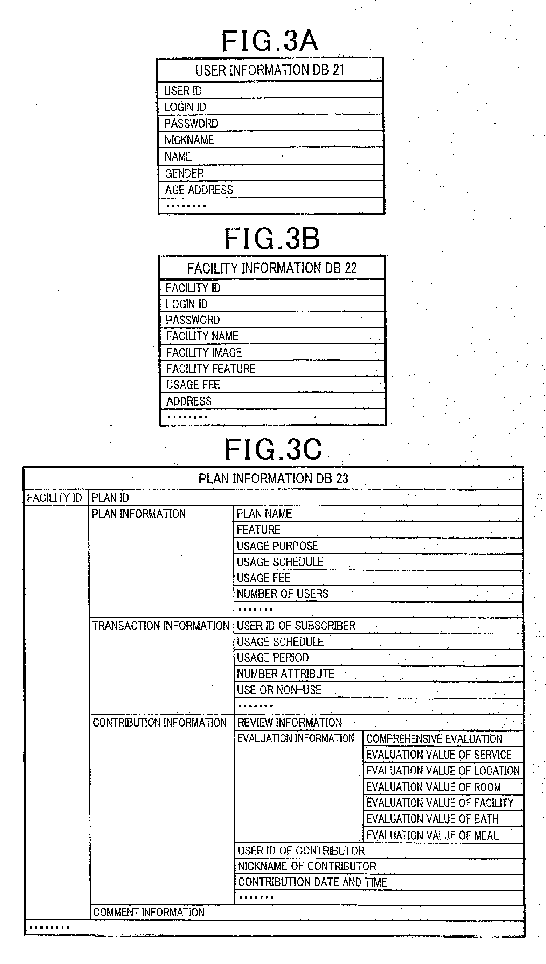

Fig. 3A to Fig. 3C are diagrams illustrating examples of contents (items) registered in the various databases.

As illustrated in Fig. 3A, user ID, login ID, password, nickname, name, gender, age, address, telephone number, email address, and evaluation item information of a user who is registered as a user member, are registered (stored) in the user information database 21 in association with each of users. The user ID is identification information unique to each of the users. The login ID and the password are authentication information used for login processing (user's authentication processing). All or part of the user ID, the login ID, the password, the nickname, the name, the gender, the age, the address, the phone number, and the email address, for example, are input from the user terminal UTn when the user is registered as the member, and are transmitted to the information providing server SA. The evaluation item information is information representing evaluation item on which the user puts emphasis when selecting the facility, and is specified based on user's review information as described below.

Next, as illustrated in Fig. 3B, facility ID, login ID, password, facility name, facility image, facility feature, usage fee, address, telephone number, traffic access, and email address of a facility which is registered as a facility member, and other detail information of the facility or the like are registered (stored) in the facility information database 22 in association with each of facilities. The login ID and the password are authentication information used for login processing (facility's authentication processing). Also, all or part of the facility ID, the login ID, the password, the facility name, the facility image, the facility feature, the usage fee, the address, the telephone number, the traffic access, the email address, and other detail information of the facility, for example, are transmitted from the facility terminal STm at the time of member registration of the facility.

Next, as illustrated in Fig. 3C, plan ID of the plan provided from the facility, plan information of the facility, transaction information, contribution information, and comment information are registered (stored) in the plan information database 23 in association with each of plans. The plan ID and the plan information, for example, are transmitted from the facility terminal STm at the time of plan preparation of the facility and are registered. For example, in a case where the facility is the accommodation, as an example of the plan provided from the corresponding facility, there is a plan "18 : 00 check-in plan · single". Also, in the plan information database 23, the facility ID of the facility providing the corresponding plan is registered in the plan ID of the plan in association with each other. Also, user ID of the user performing the reservation, usage schedule (for example, in the case of the accommodation, scheduled lodging date), number of facility users (for example, five persons), number attribute, and information regarding whether the facility is used (whether the reservation is performed) or the like are included in the transaction information. The number attribute is an attribute classified into a plurality of attributes according to the number of users. Examples of the number attribute may include "1-person use", "2-person use", and "N-person use" (where N is 3 or more). When the number of users is 1, the number of users belongs to "1-person use" of the number attribute. When the number of users is 2, the number of users belongs to "2-person use" of the number attribute. When the number of users is three or more, the number of users belongs to "N-person use" of the number attribute. The transaction information, for example, is registered in a case where a reservation confirmation operation is performed by a user who logs in, in a state where a facility detail page or the like is displayed on a user terminal UTn. Also, the contribution information includes user's review information regarding the facility, evaluation information, and information of user ID of a user who contributes the review information (hereinafter, referred to as a "contributor"), nickname of the contributor, and contribution date and time or the like. The evaluation information includes comprehensive evaluation, and user's evaluation value regarding each of a plurality of evaluation items (user' s evaluation value regarding the facility). In the example illustrated in Fig. 3C, as the evaluation items, six items are proposed: a service (customer service), a location, a room, equipment (amenities), a bath, and a meal, and an average value of evaluation values of the six items. The contribution information is registered in a case where a contribution operation is performed by a user who logs in, in a state where a review input page is displayed on a user terminal UTn. Therefore, the contribution information (review information) is associated with the facility (facility ID). Also, the facility, of which the facility information is registered in the facility information database 22, includes facilities that are not yet associated with the contribution information (having no contribution of review information and evaluation information) as well as the facility that is associated with one or a plurality of contribution information.

Also, in the above example, the facility information database 22 and the plan information database 23 are separated, but the facility information database 22 and the plan information database 23 may be integrated. Also, the various databases may be provided in a storing means of a predetermined server to which the information providing server SA can be accessible.

The input/output interface unit 3 is configured to perform interface processing among the communication unit 1, the storing unit 2, and the system controlling unit 4.

The system controlling unit 4 is configured by a central processing unit (CPU) 4a, a read only memory (ROM) 4b, a random access memory (RAM) 4c, and the like. The system controlling unit 4 as the computer performs evaluation item specifying processing and web page providing processing by executing a server program stored in the storing unit 2. In such processing, the system controlling unit 4 functions as an acquiring means, a specifying means, a controlling means, a narrowing means, a calculating means, and a determining means of the present invention according to the information processing program of the present invention (that is, the information processing program of the present invention causes the system controlling unit 4 to execute the above means). More specifically, the system controlling unit 4 acquires review information of a user trying to select a facility, and specifies an evaluation item, on which the user puts emphasis among the plurality of evaluation items when selecting the transaction target, based on the acquired user' s review information. That is, the user' s review information is analyzed, and the evaluation item emphasized by the user is specified. The system controlling unit 4 displays all or part of the facility information on a window screen of the user terminal UTn in display order of the evaluation value with respect to the specified evaluation item.

### [2. Operation of Information Providing System S]

Next, the operation of the information providing system S will be described.

### (2-1. Evaluation Item Specifying Processing)

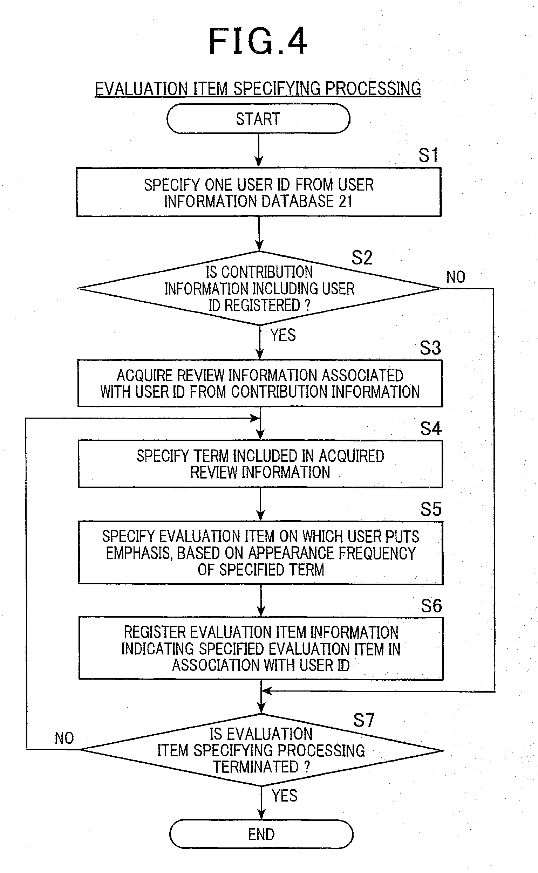

First, the evaluation item specifying processing in the system controlling unit 4 of the information providing server SA will be described with reference to Fig. 4. Fig. 4 is a flowchart illustrating the evaluation item specifying processing in the system controlling unit 4 of the information providing server SA.

The evaluation item specifying processing illustrated in Fig. 4, for example, is started whenever it arrives at a preset time (for example, 00:00 a.m.). Alternatively, the evaluation item specifying processing illustrated in Fig. 4 may be configured to be started at each contribution of contribution information (whenever the contribution information is registered in the plan information database 23). When the processing illustrated in Fig. 4 is started, the system controlling unit 4 first specifies one user ID from the user information database 21 (step S1). Also, the specifying of the user ID, for example, is performed in registration order.

Subsequently, the system controlling unit 4 determines whether the contribution information including the user ID specified in the step S1 is registered in the plan information database 23 (step S2). When it is determined that the contribution information including the user ID is registered in the plan information database 23 (YES in the step S2), the system controlling unit 4 proceeds to step S3. On the other hand, when it is determined that the contribution information including the user ID is not registered in the plan information database 23 (NO in the step S2), the system controlling unit 4 proceeds to step S7.

In step S3, the system controlling unit 4 acquires review information, which is associated with the user ID specified in the step S1, from the contribution information. The acquired review information may be all review information associated with the corresponding user ID, and may be review information registered within a predetermined past time (for example, within six months) from a present date and time.

Subsequently, the system controlling unit 4 specifies the terms included in the review information acquired in the step S3 (step S4). For example, the system controlling unit 4 extracts morphemes by dividing a character string included in the review information by a morphological analysis, which is one of natural language processings, and specifies the morphemes being, for example, a noun among them as the terms. With reference to a dictionary in which a plurality of types of words representing the evaluation items is registered, the morphemes matched with the words registered in the corresponding dictionary may be configured to be specified as the terms. For example, evaluation items arbitrarily set by a site operator side may be registered in the corresponding dictionary. For example, evaluation items specified by analyzing a plurality of review information randomly extracted from the user information database 21 may be registered.

Subsequently, the system controlling unit 4 specifies an evaluation item on which the user puts emphasis when selecting the facility, based on appearance frequency of the terms specified in the step S4 (step S5). For example, the appearance frequency is calculated with respect to each of the terms specified in the step S4. The appearance frequency, for example, is the number of appearance of the term described in the character string included in the review information. For example, the term having highest appearance frequency (in other words, being most described in the character string) is specified as the evaluation item. Therefore, by specifying the term having the highest appearance frequency as the evaluation item, the evaluation item to which the user's preference is reflected can be specified. For example, in a case where the terms such as the service, the bath, the room, and the meal are specified, when the appearance frequency of the service is "4", the appearance frequency of the bath is "10", the appearance frequency of the room is "7", and the appearance frequency of the meal is "3", the bath is specified as the evaluation item because the appearance frequency of the bath is highest. Also, in a case where one term is specified in the step S4, the corresponding term is specified as the evaluation item, without calculating the appearance frequency. Also, in a case where a plurality of review information is acquired in the step S3, the evaluation item is specified based on the appearance frequency over the plurality of review information.

By the way, in a case where a candidate of the evaluation item on which the user puts emphasis is multiple (for example, in a case where the term having the highest appearance frequency is multiple), the system controlling unit 4, for example, may be configured to specify the evaluation item corresponding to the term having a modification relation with a positive term included in the review information, among the plurality of terms having the appearance frequency, as the evaluation item on which the user puts emphasis. In this case, with reference to a dictionary in which a plurality of types of positive words is registered, a term matched with the word registered in the corresponding dictionary is specified, and a term having a modification relation with the corresponding specified positive term is specified as the evaluation item. Examples of the modification relation may include a subject-predicate relation, a modifier-modificand relationship, and the like. For example, a term ("bath" or the like) being a subject of a predicate (for example, "was wide", "was good", or the like) corresponding to a positive term is specified as the evaluation item. Alternatively, for example, a term (for example, "bath") modified by a positive term (for example, "wide", "clean", "good spring quality", or the like) is specified as the evaluation item. By specifying the term having the modification relation with the positive term as the evaluation item, the evaluation item to which the user's preference is much more reflected can be specified.

Also, the system controlling unit 4 may be configured to, in the step S4, specify a positive morpheme included in the review information among the extracted morphemes and specify a morpheme having a modification relation with the specified morpheme as the term. In this case, in a case where the specified term is single, the corresponding term is specified as the evaluation item, without calculating the appearance frequency. Also, in this case, a set of morphemes (for example, wide bath) having a modification relation with the positive morpheme may be configured to be specified as the term in the step S4.

Also, for example, in a case where a candidate of the evaluation item on which the user puts emphasis is multiple (for example, in a case where the term having the highest appearance frequency is multiple), if an evaluation value of an evaluation item corresponding to a term having a modification relation with a negative term included in the review information among a plurality of terms having the highest appearance frequency (evaluation value associated with the corresponding user's review information) is a threshold value or more, the system controlling unit 4 may be configured to specify the corresponding evaluation item as the evaluation item on which the user puts emphasis when selecting the facility. In this case, with reference to a dictionary in which a plurality of types of negative words is registered, a term matched with the word registered in the corresponding dictionary is specified, and a term having a modification relation with the corresponding specified negative term is specified. For example, a term ("bath" or the like) being a subject of a predicate (for example, "not good", "not wide", or the like, and "no", "not", or the like in the case of English) corresponding to a negative term is specified as the evaluation item. Alternatively, for example, a term (for example, "room") modified by a negative term (for example, "narrow", "dirty", or the like) is specified. When an evaluation value of an evaluation item corresponding to a specified term (for example, room) (for example, evaluation value of "2" for the room) is extracted from contribution information including a specified user ID in the step S1 and the extracted evaluation value is a threshold value (for example, 4) or more, the system controlling unit 4 specifies the corresponding evaluation item as the evaluation item on which the user puts emphasis. The term having a modification relation with a negative term included in review information regarding a facility having high evaluation may be considered as being persistently emphasized by the user. Therefore, the evaluation item to which the user's persistence is reflected can be specified. Also, in a case where the evaluation item whose extracted evaluation value is the threshold value or more is multiple (for example, "bath" is 5 and "meal" is 4.5), the system controlling unit 4 specifies the evaluation item having a larger evaluation value (for example, bath) as the evaluation item on which the user puts emphasis. Therefore, the evaluation item to which the user's persistence is stronger can be specified.

Also, the system controlling unit 4 may be configured to, in the step S4, specify a negative morpheme included in the review information among the extracted morphemes and specify a morpheme as the term when an evaluation value of an evaluation item corresponding to a morpheme having a modification relation with the specified morpheme is a threshold value or more. In this case, in a case where the specified term is single, the corresponding term is specified as the evaluation item, without calculating the appearance frequency.

Subsequently, the system controlling unit 4 registers the evaluation item information, which represents the evaluation item specified in the step S5, in the user information database 21 in association with the user ID specified in the step S1 (step S6). In this manner, the system controlling unit 4 previously specifies the evaluation item on which the user puts emphasis, and registers the evaluation item information, which represents the evaluation item, in the user information database 21 in association with the user ID. Therefore, as described below, when there is a page request from the user terminal UTn, the system controlling unit 4 can rapidly display facility information of a plurality of facilities with respect to the evaluation value, in display order of the evaluation value of the evaluation item represented in the corresponding evaluation item information.

Subsequently, the system controlling unit 4 determines whether the evaluation item specifying processing is terminated (step S7). For example, in this processing, when the user ID is specified as many as a predetermined number (for example, tens of thousands of cases) in the step S1, or when a predetermined time has elapsed, it is determined that the evaluation item specifying processing is terminated. When it is determined that the evaluation item specifying processing is not terminated (NO in the step S7), the processing returns to step S1. A user ID, which is not yet specified, is specified and the same processing as described above is performed. On the other hand, when it is determined that the evaluation item specifying processing is terminated (YES in the step S7), the relevant processing is terminated. Since the evaluation item specifying processing is performed at predetermined time intervals (for example, twenty-four hours), even a user ID, which is not specified in the current evaluation item specifying processing in the step S1, is specified in subsequent next evaluation item specifying processing. Also, when the evaluation item specifying processing is performed on all user IDs registered in the user information database 21, that is, when one cycle is performed, the evaluation item specifying processing is performed again on the same user ID. Therefore, the evaluation item of each user can be updated once every predetermined periods of time (for example, every month).

### (2-2. Web Page Providing Processing)

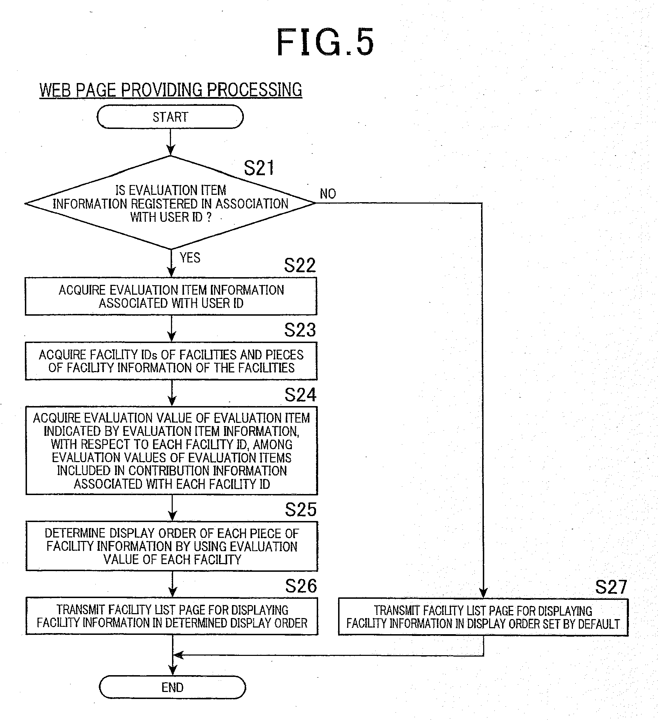

Next, web page providing processing in the system controlling unit 4 of the information providing server SA will be described with reference to Fig. 5 and the like. Fig. 5 is a flowchart illustrating the web page providing processing in the system controlling unit 4 of the information providing server SA. Also, in the following description, it is assumed that the user terminal UT1 displays a search condition input page, which is acquired from the information providing server SA, on a window screen. Also, it is assumed that the user of the user terminal UT1 is logged in by login processing of the information providing server SA.

Although not illustrated, a keyword input unit and a use condition input unit capable of inputting a search condition used for search are provided in the search condition input page. Also, the search condition is used for searching the plan the facility provides. In the keyword input unit, the user of the user terminal UT1 can input a keyword (search word), such as facility name or feature, as the search condition through an operation unit (a select input from input candidates is also included). Also, in the use condition input unit, the user of the user terminal UT1 can input a use condition as the search condition through the operation unit. Herein, the use condition includes a usage schedule, a usage fee, number of users, a usage area, a usage purpose, and the like.

When the user of the user terminal UT1 performs a search request operation (for example, designates a search button) after inputting at least one of the keyword and the use condition as the search condition, a page request including a search query representing the input search condition is transmitted from the user terminal UT1 through the network NW to the information providing server SA. The page request represents, for example, a request for a facility list page or a plan list page. Also, even when the user does not input the search condition, the page request representing the request for the facility list page or the plan list page can be transmitted from the user terminal UT1. For example, in the case of requesting the facility list page of facilities providing seasonal limited special plans (for example, when the user designates a display image of the special plan), the input of the search condition is unnecessary.

When receiving the page request from the user terminal UT1, the information providing server SA starts processing illustrated in Fig. 5. In step S21 illustrated in Fig. 5, the system controlling unit 4 of the information providing server SA determines whether evaluation item information is registered in the user information database 21 in association with the user ID of the user (logged-in user) of the user terminal UT1 transmitting the corresponding page request. When it is determined that the evaluation item information associated with the corresponding user ID is registered (YES in the step S21), the system controlling unit 4 proceeds to step S22, and when it is determined that the evaluation item information associated with the corresponding user ID is not registered (NO in the step S21), the system controlling unit 4 proceeds to step S27.

In step S22, the system controlling unit 4 acquires the evaluation item information, which is associated with the user ID of the user of the user terminal UT1, from the user information database 21.

Subsequently, the system controlling unit 4 acquires a plurality of facility IDs of facilities, which display facility information on, for example, the facility list page requested in the page request, and a plurality of facility information of the corresponding facilities from the facility information database 22 or the like (step S23). Herein, when the search query is included in the page request, the system controlling unit 4 searches for the facilities, based on the search condition indicated by the corresponding search query, and acquires a plurality of facility IDs or the like of facilities satisfying the corresponding search condition from the facility information database 22 or the like. On the other hand, when the search query is not included in the page request, the system controlling unit 4 acquires a plurality of facility IDs or the like of facilities set by default from the facility information database 22 or the like. For example, the facility ID is set by default with respect to a requested page (page identification information) or identifying an event (event identification information). Also, in the step S23, the system controlling unit 4 may be configured to acquire plan information, which is associated with each corresponding facility ID through the plan ID, from the plan information database 23.

Subsequently, with reference to the plan information database 23, among the evaluation values of evaluation items (that is, evaluation values of the plurality of respective evaluation items), which are included in the contribution information associated with each of the facility IDs acquired in the step S23 through the plan ID, the system controlling unit 4 acquires the evaluation value of the evaluation item (that is, the evaluation item on which the user puts emphasis when selecting the facility), which is indicated by the evaluation item information acquired in the step S22), from the plan information database 23 with respect to each of the facility IDs (step S24). Regarding the facilities associated with the plurality of contribution information (including the review information and the evaluation information) (that is, the facilities to which the review information and the evaluation information are contributed from a plurality of contributors), the evaluation value acquired in the step S24 becomes an evaluation value among the plurality of contributors. The evaluation values among the plurality of contributors, for example, are a value calculated by substituting the evaluation value of each contributor into a predetermined calculation formula, and corresponds to a sum of evaluation values of the respective contributors (total evaluation value) with respect to the evaluation item indicated by the evaluation item information, an average of evaluation values of the respective contributors (average evaluation value), or a dispersion of evaluation values of the respective contributors (dispersion average value). Also, the evaluation values among the plurality of contributors may be calculated at a timing where the processing of step S24 is performed, or may be calculated in another timing and registered in association with the facility ID of the corresponding facility.

Subsequently, the system controlling unit 4 determines a display order of each piece of the facility information associated with the corresponding evaluation value through each facility ID (each piece of the facility information acquired in the step S23) by using each evaluation value (evaluation value for each facility) acquired in the step S24 (step S25) . For example, the display order of each piece of the facility information is determined in descending order of the evaluation value. That is, as the facility information of the facility has a higher evaluation value, the display order has higher priority (holds a high rank of the display order). Also, the facility information acquired in the step S23 may include facility information that is not associated with the evaluation value. According to the present embodiment, the display order of the facility information that is not associated with the evaluation value is lower than the display order of the facility information that is associated with the evaluation value. The display order of the facility information of the facility in which the evaluation value of the evaluation item on which the user puts emphasis is higher than a predetermined level has only to have priority. Therefore, for example, the display order of the facility information in which the evaluation value of the evaluation item on which the user puts emphasis is a threshold value (for example, 1) or less may be configured to be lower than the display order of the facility information that is not associated with the evaluation value.

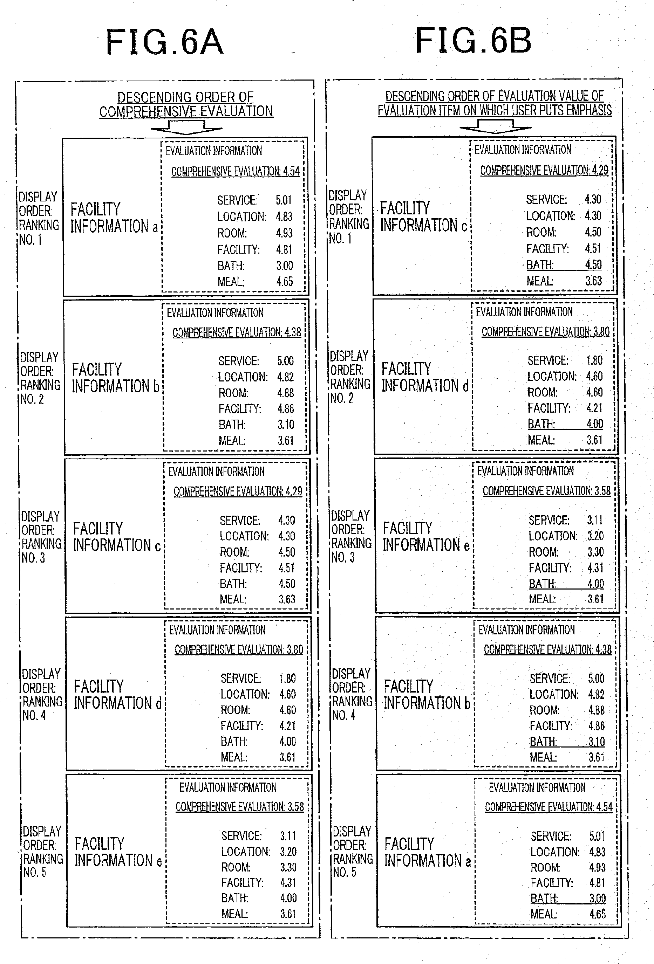

Fig. 6A and Fig. 6B are conceptual diagrams illustrating examples of the display order of the facility information of each facility. The display order of the facility information illustrated in Fig. 6A is set in descending order of a comprehensive evaluation with respect to each facility. On the other hand, the display order of the facility information illustrated in Fig. 6B is set in descending order of an evaluation value for an evaluation item (in this example, bath) on which the user puts emphasis. Also, in the example illustrated in Fig. 6B, since the evaluation values for the evaluation item "bath" of facility information d and facility information e are equal to each other, the display order of the facility information d and the facility information e is set in, for example, descending order of a comprehensive evaluation or a registration order (descending order by date).

Also, in a case where a plurality of plan information is acquired in the step S23, the display order of the plan information of each facility may be configured to be determined in the step S25. In this case, the display order of each piece of the plan information is determined such that the plan information of the facility having a higher evaluation value holds a high rank.

Subsequently, the system controlling unit 4 generates a facility list page (or plan list page) for displaying all or part of the facility information (or plan information) in the display order determined in the step S25, and transmits a structured document file or the like (example of display data) of the corresponding facility list page (or plan list page) to the user terminal UT1 (step S26). In this manner, all or part of the facility information (or plan information) is displayed by a web browser of the user terminal UT1 on the window screen in the display order of the evaluation value with respect to the evaluation item on which the user puts emphasis.

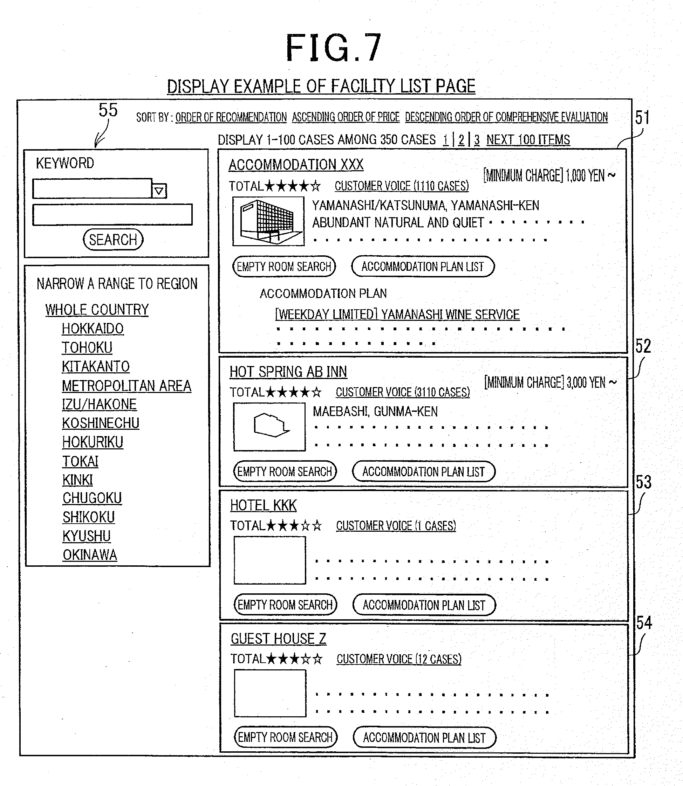

Fig. 7 is a diagram illustrating an example of the facility list page displayed on the window screen of the user terminal UT1. On the facility list page illustrated in Fig. 7, the facility information 51 to 54 is displayed in the display order determined in the step S25. On the facility list page displayed as above, facility information that cannot be displayed within the window screen is displayed on the window screen by scrolling display content of the facility list page according to a user's scroll operation. Also, a keyword input unit 55 and the like are provided on the facility list page illustrated in Fig. 7. When the user inputs a search condition to the keyword input unit 55 and performs a search request operation, in the same manner as described above, a page request including a search query indicating the input search condition is transmitted from the user terminal UT1 through the network NW to the information providing server SA. Therefore, the information providing server SA performs the processing of the steps S23 to S26 in the same manner as described above. In this case, for example, by using Ajax, the display data for newly displaying the facility information in the display order determined in the step S25 may be configured to be transmitted to the user terminal UT1, without refreshing the entire facility list page (without reloading from the information providing server SA by the user terminal UT1), so that the list of the facility information is displayed in the corresponding display order.

On the other hand, in step S27, the system controlling unit 4 acquires a plurality of facility information of facilities from the facility information database 22 or the like, generates a facility list page for displaying the facility information in the display order set by default (for example, in descending order of a comprehensive evaluation), and transmits a structured document file or the like of the facility list page to the user terminal UT1.

As described above, according to the above embodiment, it is configured such that an evaluation item on which the user puts emphasis when selecting the facility is specified among a plurality of evaluation items, based on review information of a user trying to select the facility, and all or part of the facility information associated with the evaluation value are displayed in the display order of the evaluation value with respect to the evaluation item. Therefore, the user's preference or persistence can be further reflected with respect to the display order of the facility information of the plurality of facilities as compared with the prior art.

The evaluation value is assigned within a predetermined numerical range with respect to the previously determined evaluation item. For example, in a case where an evaluation value assignment criteria becomes strict and a high evaluation value is not assigned even though the evaluation item is treated as important, or in a case where a high evaluation value is not assigned because both a good point and a bad point exist, it is difficult to reflect the user's preference or persistence to the assigned evaluation value. In this regard, the review information is a free expression of the user's impression, and it is easy to reflect the user's preference or persistence. According to the present embodiment, for example, even in a case where the review information is "the meal" was good but small in quantity and "3.00" is assigned as the evaluation value of "meal", it can be determined that the user puts emphasis on "meal" from "the meal was good" included in the review information. Therefore, the evaluation item on which the user puts emphasis when selecting the facility is determined based on not the evaluation value but the corresponding user' s review information. In this manner, the user's preference or persistence can be further reflected with respect to the display order of the facilities as compared with the prior art.

### (2-3. First Modification of Web Page Providing Processing)

The web page providing processing is configured such that the evaluation item information is acquired from the user information database 21 in step S22, but, as another example, the web page providing processing may be configured such that the evaluation item on which the user puts emphasis is specified when a page request is received. In the case of this configuration, the processing of step S2 illustrated in Fig. 4 is performed instead of the processing of the steps S21 and S22. When it is determined in the step S2 that the contribution information including the user ID of the user of the user terminal UT1 transmitting the page request is registered in the plan information database 23 (YES in the step S2), the processing of steps S3 to S5 is performed to specify the evaluation item, and the corresponding evaluation item is used in the step S24. Also, when the contribution information is not registered in the plan information database 23, the processing proceeds to step S27. According to such a configuration, the display order of the facility information can be determined by using the latest evaluation item on which the user puts emphasis at present.

Also, in this configuration, in a case where the search query indicating "number of users who use the facility" is included in the page request received from the user terminal UT1 as the search condition, the system controlling unit 4 acquires, in the step S3, the review information associated with transaction information (transaction information in which "use" is set in the use or non-use of facility) including the number attribute, to which the number of users indicated in the corresponding search query belongs, among a plurality of review information associated with the user ID of the user of the user terminal UT1 transmitting the corresponding page request. For example, when the number of users input as the search condition is "one person", review information associated with transaction information including "1-person use" is acquired. Also, for example, when the number of users input as the search condition is "two persons", review information associated with transaction information including "2-person use" is acquired. Also, for example, when the number of users input as the search condition is "three persons", "four persons", or "five persons", review information associated with transaction information including "N-person use" is acquired. For example, it is assumed that the user of the user terminal UT1 contributes review information regarding the facility used from 2001 up to now, and the review information has been registered. In this case, for example, in a case where the number of users who used the facility from 2001 to 2003 is one person, the number of users who used the facility from 2003 to 2005 is two persons, the number of users who used the facility from 2005 to 2006 is four persons, the number of users who used the facility from 2006 to the present is five persons, and the number of users included in the use condition this time is five persons, transaction information including "N-person use" in the number attribute (that is, review information being contributed since 2005) is acquired. The evaluation item on which the user puts emphasis is specified based on the review information associated with the number attribute to which the user number input as the search condition by the user belongs. In the case where the number of users is "1 person" and the case where the number of users is "3 or more persons", it is assumed that the evaluation item on which the user puts emphasis is changed. Therefore, by forming the configuration as described above, the evaluation item to which the user's preference is reflected can be specified based on the past review information matched with the number of users this time. As a result, the user's preference can be reflected with respect to the display order of the facility information of the plurality of facilities.

### (2-4. Second Modification of Web Page Providing Processing)

In the web page providing processing, the evaluation value acquired in step S24 with respect to the facility associated with the plurality of contribution information (including the review information and the evaluation information) is the evaluation values among all contributors associated with the facility ID acquired in the step S23 (for example, the total evaluation value or the average evaluation value), but, as another example, it may also be configured such that the evaluation values among the contributors are calculated by using only the evaluation value by each contributor of review information similar to the content of the review information of the user of the user terminal UT1. The review information similar to the content of the corresponding user's review information is specified based on a result of comparison between information acquired from the user's review information and information acquired from the review information of the contributors other than the corresponding user. For example, the review information may be specified by using a well-known morphological analysis technology such as TF/IDF.

As one example, the system controlling unit 4 calculates appearance frequency of each term, which is included in the review information, with respect to each contributor (including the user of the user terminal UT1) by using the same method as the step S4, and determines the ranking in descending order of the appearance frequency of each term with respect to each corresponding contributor. Information in which the ranking is determined is an example of the information acquired from the review information. Also, in a case where one contributor contributes a plurality of review information, the appearance frequency of each term over the plurality of corresponding review information is calculated. The system controlling unit 4 registers the information in which the ranking of each term is determined (for example, ranking No. 1 "bath", ranking No. 2 "meal", ranking No. 3 "service", ranking No. 4 "room", ...), as interest information (preference information), in the user information database 21 in association with the user ID of each contributor. Also, in this example, the terms (ranking No. 1 to ranking No. 4), in which the appearance frequency is calculated, are matched with the evaluation items, but the corresponding terms may not be matched with the evaluation items. For example, the terms may be "wide bath", "clean bath", "quiet environment", and the like. This processing has only to be configured to be performed at an arbitrary timing, but, the efficiency increases if the processing is performed in, for example, the evaluation item specifying processing illustrated in Fig. 4.

In step S24 illustrated in Fig. 5, the system controlling unit 4 acquires the interest information, which is associated with the user ID of the user of the user terminal UT1 transmitting the page request, from the user information database 21. Then, the system controlling unit 4 acquires the user ID of each contributor included in each piece of the contribution information associated with the facility ID acquired in the step S23 through the plan ID, and acquires the interest information associated with the acquired user ID of each contributor from the user information database 21.

Then, the system controlling unit 4 compares the interest information of the user of the user terminal UT1 with the interest information of each contributor, and narrows a range to a plurality of contributors (user IDs of contributors) among all contributors providing (contributing) the contribution information (review information), based on a result of the comparison. For example, among the rankings of the terms indicated in the interest information of the user of the user terminal UT1, the user IDs of the contributors assigned to the interest information matched with the ranking Nos. 1 to 3 are specified. The system controlling unit 4 calculates the evaluation values among the plurality of corresponding contributors, based on the evaluation value of each of the plurality of contributors whose range is narrowed (the evaluation values of the evaluation items on which the user of the user terminal UT1 puts emphasis). When determining the display order in the step S25, the system controlling unit 4 uses the corresponding calculated evaluation value as the evaluation value of the facility associated with the plurality of contribution information. According to such a configuration, since an evaluation value of a certain facility (evaluation value of an evaluation item on which the user puts emphasis) is calculated based on an evaluation value of each contributor of review information similar to the content of review information of the user of the user terminal UT1, the user's preference can be further reflected with respect to the display order of the facility information of the facility.

### (2-5. Third Modification of Web Page Providing Processing)

The web page providing processing is configured such that the display order of the facility information of each facility is determined in step S25 by using the evaluation value of the evaluation item on which the user puts emphasis, but, as another example, the web page providing processing may also be configured such that the display order of the facility information of each facility is determined by using the evaluation item on which the user puts emphasis and a second evaluation item other than the corresponding evaluation item. In the case of this configuration, the system controlling unit 4 acquires, from the plan information database 23, the evaluation value included in the contribution information associated with the user ID registered in the user information database 21 (evaluation values of the plurality of respective evaluation items). The system controlling unit 4 specifies an evaluation item having, for example, a minimum evaluation value among the evaluation values of the plurality of respective evaluation items, as the second evaluation item, determines the evaluation value of the corresponding evaluation item as an acceptable value (limit value of tolerance, for example, 2), and registers the second evaluation item and acceptable value information including the acceptable value in the user information database 21 in association with the corresponding user ID. Also, in a case where there is a plurality of evaluation items having the minimum evaluation value among the evaluation values of the plurality of respective evaluation items, the plurality of evaluation items may be determined as the second evaluation item.

This processing has only to be configured to be performed at an arbitrary timing with respect to each of the user IDs registered in the user information database 21, but, the efficiency increases if the processing is performed in, for example, the evaluation item specifying processing illustrated in Fig. 4. Also, in a case where a plurality of evaluation values is registered with respect to the plurality of evaluation items in association with the user ID, it may be configured such that an average of the evaluation values of, for example, the second evaluation item among them is calculated and the corresponding average evaluation value is specified as an acceptable value.

In step S22 of the web page providing processing, the system controlling unit 4 acquires the evaluation item information and the acceptable value information, which are associated with the user ID of the user of the user terminal UT1, from the user information database 21. In the step S24, the system controlling unit 4 acquires the evaluation value of the evaluation item indicated by the evaluation item information acquired in the step S22 (evaluation item (for example, bath) on which the user puts emphasis), and the evaluation value of the second evaluation item (for example, service) included in the acceptable value information, among the evaluation values of the evaluation items included in the contribution information associated with the respective facility IDs acquired in the step S23, from the plan information database 23 with respect to each of the facility IDs (step S24) . The system controlling unit 4 determines the display order by giving priority to the facility whose evaluation value with respect to the second evaluation item is the acceptable value (for example, 2) or more, among the plurality of facilities associated with the same evaluation value with respect to the evaluation item indicated by the evaluation item information acquired in the step S22 (that is, in this step, facilities having the same display order) (step S25), and displays the facility information in the determined display order. For example, in the example illustrated in Fig. 6B, regarding the facility information d and the facility information e associated with the evaluation value of the evaluation item on which the user puts emphasis, the evaluation value "1.80" of the second evaluation item "service" of the facility information d is less than the acceptable value, but the evaluation value "3.11" of the second evaluation item "service" of the facility information e is the acceptable value or more. Therefore, the display order of the facility information d and the facility information e is exchanged. According such a configuration, in a case where there is a plurality of facilities having the same evaluation value with respect to the evaluation item on which the user puts emphasis, the display order of the facility information of the facility whose evaluation value with respect to the second evaluation item is unacceptable (intolerable) by the user can be lowered down. Therefore, the user's preference can be reflected with respect to the display order of the facility information of the plurality of facilities.

Also, in the above embodiment, the information providing server SA is configured to perform the processing of the steps S23 to S25 (that is, the information providing server SA functions as the information processing apparatus of the present invention), but, as another example, the user terminal UT1 may be configured to perform the processing of the steps S23 to S25 and display all or part of the facility information (or plan information) on the window screen in the display order of the evaluation value with respect to the evaluation item, on which the user puts emphasis, by the web browser of the user terminal UT1 (that is, the user terminal UT1 functions as the information processing apparatus of the present invention). In the case of this configuration, an information processing program of the present invention is installed on the user terminal UT1. In this case, the user terminal UT1 acquires the user' s review information from the information providing server SA, and specifies the evaluation item, on which the corresponding user puts emphasis, among the plurality of evaluation items by performing the same processing as the steps S4 and S5, based on the acquired review information. The user terminal UT1 acquires the facility ID of the facility and the facility information from, for example, the facility list page acquired from the information providing server SA by the page request (step S23). Subsequently, among the evaluation values of the evaluation items (that is, evaluation values of the plurality of respective evaluation items) included in the contribution information associated with each of the facility IDs acquired in the step S23, the user terminal UT1 acquires the evaluation value of the specified evaluation item (that is, the evaluation item on which the user puts emphasis when selecting the facility) from the information providing server SA with respect to each of the facility IDs (step S24). Subsequently, the user terminal UT1 determines the display order of the facility information by using each of the evaluation values acquired in the step S24 (step S25), and displays all or part of the facility information (or plan information) on the window screen in the corresponding display order by the web browser. Also, in the case of this configuration, the information processing program installed on the user terminal UT1, for example, may be downloaded from a predetermined server or the like through the network NW, or may be from a recording medium having stored therein the program, such as a CD, a DVD, or the like. Also, as another example, the information processing program of the present invention, for example, may be configured to be described as a script (simple program described by a script language, for example, JavaScript (registered trademark) or the like) and the like within a structured document constituting the facility list page or the like, and the corresponding script may be executed by the web browser (even in the case of this configuration, the user terminal UTn functions as the information processing apparatus of the present invention).

Also, in the above embodiment, the facility has been described as an example of the transaction target, but the embodiment can also be applied to other examples of the transaction target, such as a product, a store (for example, restaurant), or a dealer (catalog retailer or a real estate agent). Also, in a case where the transaction target is a product, a product information database is used instead of the facility information database 22. Information regarding products capable of commercial transaction (sale and purchase) on a shopping site or an auction site is registered in the product information database. Specifically, product IDs of products provided (submitted) by a product exhibitor (store or individual), product information (product name, description of product, product image, product price, and the like), transaction information (exhibition date and time, deal-making date and time, and the like), contribution information, comment information, and the like are registered (stored) in the product information database in association with the products. The information providing server SA acquires review information of a user trying to select the product, grasps the evaluation item, on which the user puts emphasis when selecting the product among a plurality of evaluation items, based on the acquired user's review information, and displays all or part of the product information associated with the evaluation value on the window screen of the user terminal UT1 in the display order of the evaluation value with respect to the specified evaluation item.

### Reference Sign List

- 1: communication unit
- 2: storing unit
- 3: input/output interface unit
- 4: system controlling unit
- 5: system bus
- UTn: user terminal
- STm: facility terminal
- SA: information providing server
- NW: network

## Claims

1. An information processing apparatus comprising:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.

2. The information processing apparatus according to claim 1,
wherein the specifying means specifies the evaluation item, based on appearance frequency of terms included in the review information.

3. The information processing apparatus according to claim 1 or 2, further comprising:
a narrowing means that narrows a range to a plurality of users among all users who provided the review information stored in the storing means, based on a result of comparison between information acquired from the review information of the user trying to select the transaction target and information acquired from review information of other user; and
a calculating means that calculates evaluation scores among a plurality of users, based on the evaluation score regarding the evaluation item specified by the specifying means, the evaluation score being for each of the plurality of users narrowed by the narrowing means,
wherein the control unit uses the evaluation scores, which are calculated by the calculating means, as the evaluation score of the transaction target associated with the evaluation score and the review information of each of the plurality of users, when determining the display order.

4. The information processing apparatus according to any one of claims 1 to 3,
wherein among number attributes classified into a plurality of attributes according to the number of users, the number attribute to which the number of users using the transaction target in the past belongs is associated with the review information, and
the acquiring means acquires the review information associated with the number attribute, to which the number of users input as a search condition by a user trying to select the transaction target belongs.

5. The information processing apparatus according to any one of claims 1 to 4, further comprising a determining means that determines an acceptable value with respect to a second evaluation item other than the evaluation item specified by the specifying means,
wherein among a plurality of transaction targets associated with a same evaluation score with respect to the evaluation item specified by the specifying means, information of the transaction targets is displayed in such a display order that a display priority is given to the transaction target whose evaluation score with respect to the second evaluation item is an acceptable value or more, the acceptable value being determined by the determining means.

6. The information processing apparatus according to any one of claims 1 to 5,
wherein the specifying means specifies an evaluation item, which corresponds to a term having a dependency relation with a positive term included in the review information, as the evaluation item on which the user puts emphasis when selecting the transaction target.

7. The information processing apparatus according to claim 6,
wherein when there are a plurality of candidates of the evaluation item on which the user puts emphasis when selecting the transaction target, the specifying means specifies an evaluation item, which corresponds to a term having a dependency relation with a positive term included in the review information, as the evaluation item on which the user puts emphasis when selecting the transaction target.

8. The information processing apparatus according to any one of claims 1 to 5,
wherein when an evaluation score of the evaluation item corresponding to a term having a dependency relation with a negative term included in the review information is a threshold value or more, the specifying means specifies the evaluation item as the evaluation item on which the user puts emphasis when selecting the transaction target.

9. The information processing apparatus according to claim 7,
wherein when there are a plurality of evaluation items having the threshold value or more, the specifying means specifies the evaluation item, whose evaluation score is large, as the evaluation item on which the user puts emphasis when selecting the transaction target.

10. An information processing method, which is executed by a computer, the information processing method comprising:
a step of acquiring review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a step of specifying an evaluation item on which a user puts emphasis among the plurality of evaluation items when selecting the transaction target, based on the acquired user's review information; and
a step of displaying all or part of the information of the transaction targets which are stored in the storing means, on a display screen in display order based on the evaluation score with respect to the specified evaluation item.

11. An information processing program which causes a computer to function as:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.

12. A recording medium having stored therein an information processing program which causes a computer to function as:
an acquiring means that acquires review information of a user trying to select a transaction target, from a storing means that stores user's review information regarding a plurality of transaction targets and user's evaluation scores regarding each of a plurality of predetermined evaluation items in association with each piece of information of the plurality of transaction targets;
a specifying means that specifies an evaluation item on which a user puts emphasis among the plurality of evaluation items when selecting the transaction target, based on the user' s review information acquired by the acquiring means; and
a controlling means that displays all or part of the information of the transaction targets which are stored in the storing means, on a display screen in display order based on the evaluation score with respect to the evaluation item specified by the specifying means.
